# EUROPEAN PATENT APPLICATION

(11) **EP 3 845 760 A1**
(43) Date of publication of application: **07.07.2021**
(21) Application number: 19383223.5
(22) Date of filing: 31.12.2019
(51) Int. Cl.: F03D 80/70, F03D 1/06

(54) **PITCH BEARING OF A WIND TURBINE, WIND TURBINE AND METHOD OF LIMITING THE STRESSES IN THE REINFORCEMENT PLATES OF A PITCH BEARING**

(71) Applicant: Nordex Energy Spain, S.A.U., 31395 Barasoain (Navarra) (ES)
(72) Inventor: FERNANDEZ FALCES, Sara, 31395 BARASOAIN (NAVARRA) (ES); GARCÍA-HERREROS ARDANAZ, Angel, 31395 BARASOAIN (NAVARRA) (ES); PASCUAL RESANO, Javier, 31395 BARASOAIN (NAVARRA) (ES); ARÍSTEGUI LANTERO, Jose Luis, 31395 BARASOAIN (NAVARRA) (ES); NÚÑEZ POLO, Miguel, 31395 BARASOAIN (NAVARRA) (ES)
(74) Representative: Pons

(57) **Abstract**

The present invention relates to a pitch bearing of a wind turbine wherein the pitch bearing comprises at least a first reinforcement plate, at least a second reinforcement plate and least one support element configured to connect the at least a first reinforcement plate and the at least a second reinforcement plate, providing a stress optimization in the pitch bearing, also reducing the required forces and limiting the deformations of the pitch bearing actuator without increasing the stiffness of the pitch bearing, and it also relates to a method of limiting the stresses in the pitch bearing.

## Description

### OBJECT OF THE INVENTION

The present invention relates to a pitch bearing of a wind turbine wherein the pitch bearing comprises at least a first reinforcement plate, at least a second reinforcement plate and at least one support element configured to connect the at least a first reinforcement plate and the at least a second reinforcement plate providing stress optimization in the reinforcement plates, also reducing the required forces and limiting the deformations of the pitch bearing actuator, without increasing the stiffness of the pitch bearing or the thickness of the reinforcement plates.

The invention also relates to a method of limiting the stresses in the reinforcement plates of a pitch bearing.

### BACKGROUND OF THE INVENTION

In variable wind speed incident on a wind turbine, pitch system is used to vary the pitch angle of the wind turbine blades. On one hand it allows to increase the capture of the wind power and, on the other hand, to limit the level of the loads produced by the wind on the whole of the wind turbine (particularly above nominal power).

It is known in the state of the art, a configuration wherein a reinforcement plate (pitch plate) is disposed on the surface of the movable ring of the bearing closest to the hub shaft which is opposed to the surface of the movable ring (upper surface) that it is attached to the root of the blade. Said reinforcement plate, usually full circle-shaped, can be lightened by performing some openings on different parts of the plate.

It is also known a configuration wherein a reinforcement plate (pitch plate) is disposed on the surface of the movable ring of the bearing closest to the root of the blade. Said reinforcement plate, usually full circle-shaped, can be lightened by performing some openings on different parts of the plate.

Document EP1959129B2 discloses a wind turbine with a rotor hub which is connected to at least one pitch bearing, and with at least one rotor blade, the blade root of which is connectable to the pitch bearing via joining means, wherein the pitch bearing is realized as a rolling bearing with an inner and an outer ring, wherein a stiffening element is provided, which is arranged between the rotor blade root and the pitch bearing and connected to the same via the joining means, wherein the junction of the rotor blade and the stiffening element has a stiffness which corresponds to the stiffness in the region of the junction of the pitch bearing and the rotor hub, wherein the stiffening element is realized as a plate and provided with one or several openings.

Document US9951815B2 discloses a pitch bearing assembly for a wind turbine wherein the inner race of the bearing includes a circumferential flange extending at least partially around the inner circumference, where the top surface of the circumferential flange is coplanar with the top surface of the inner race further comprising a stiffener coupled to the circumferential flange, wherein the stiffener includes a ring-shaped mounting flange and a stiffening web extending within the mounting flange, wherein the stiffening web comprises at least two radially extending portions spaced apart from each other.

However, depending on the loads or even the pitch bearing configuration (height, conning angle, etc.), a second reinforcement plate can be added. In this cases, the plates are both of that described above, i.e., a reinforcement plate (pitch plate) is disposed on the surface of the movable ring of the bearing closest to the hub shaft and a reinforcement plate (pitch plate) is disposed on the surface of the movable ring of the bearing closest to the root of the blade.

Document EP2933476B1 discloses a reinforced pitch bearing of a wind turbine with two coaxial reinforcement plates comprising a common axis of symmetry which are disposed substantially parallel to the pitch bearing and it comprises further reinforcement means which are arranged coupled in between both reinforcement plates.

However, in this last solution it is necessary to include further reinforcement means arranged in between the two reinforcement plates wherein the two reinforcement plates are coupled by the further reinforcement means for increasing the stiffness in the pitch bearing, reducing in this way the overall stress in the blade bolts under extreme loading.

The pitch bearing of a wind turbine of the present invention limits the stresses without adding further reinforcement means to the at least a first reinforcement plate and the at least a second reinforcement plate, providing stress optimization in the pitch bearing, also reducing the required forces and limiting the deformations of the pitch bearing actuator, without increasing the stiffness of the pitch bearing or the thickness of the reinforcing plates.

### DESCRIPTION OF THE INVENTION

The present invention relates to a pitch bearing of a wind turbine, wherein the wind turbine comprises a low speed shaft that connects a rotor hub to a gearbox, wherein the rotor hub comprises a nose cone opposite to the low speed shaft, and wherein the pitch bearing comprises a pitch bearing actuator, at least a first reinforcement plate, at least a second reinforcement plate and at least one support element configured to connect the at least a first reinforcement plate and the at least a second reinforcement plate, providing a stress optimization in the reinforcement plates, also reducing the required forces and limiting the deformations of the pitch bearing actuator, without increasing the stiffness of the pitch bearing or the thickness of the reinforcing plates.

The pitch bearing comprises an outer ring and an inner ring, wherein the outer ring and the inner ring are arranged coaxially to each other, thus comprising a central axis for both rings,
wherein the at least a first reinforcement plate is attached to the inner ring and is arranged at a first axial end of the pitch bearing defined with regard to the central axis,
wherein the at least a second reinforcement plate is attached to the inner ring and is arranged at a second axial end of the pitch bearing defined with regard to the central axis,
wherein the at least a first reinforcement plate comprises a first connecting surface disposed on a hub side surface, whereto a pitch bearing actuator shaft is configured to be connected,
wherein the at least one support element configured to connect the at least a first reinforcement plate and the at least a second reinforcement plate is connected to the first reinforcement plate on a second connecting surface disposed in a region close to the first connecting surface. Optionally, the second connecting surface of the at least a first reinforcement plate is disposed on a blade side surface.

Optionally, the second connecting surface is opposite to the first connecting surface.

Optionally, the at least a first reinforcement plate and the at least a second reinforcement plate are arranged substantially parallel to each other, and

Optionally, the at least one support element configured to connect the at least a first reinforcement plate and the at least a second reinforcement plate comprises a first cylindrical element.

In this way, the stresses in the pitch bearing are locally limited to areas proximal to the at least one support element, providing a stress optimization in the reinforcement plates, also reducing the required forces and limiting the deformations of the pitch bearing actuator, without increasing the stiffness of the pitch bearing or the thickness of the reinforcing plates.

Optionally, the first cylindrical element is a hollow-shaped cylindrical element.

Optionally, the at least one support element further comprises a first end adjacent to the first cylindrical element and a second end adjacent to the first cylindrical element.

Optionally, the first end is a second cylindrical element and the second end is a third cylindrical element, wherein preferably, the second cylindrical element and the third cylindrical element have the same diameter.

Preferably, the second cylindrical element and the third cylindrical element have the same diameter as the diameter of the first cylindrical element.

Also preferably, the second cylindrical element and the third cylindrical element have a different diameter, preferably a bigger diameter, than the diameter of the first cylindrical element. In this embodiment, the at least one support element further comprises transition zones between the first end and the first cylindrical element and between the second end and the first cylindrical element.

Optionally, the first end and the second end comprise at least first joining means configured to connect the at least a first reinforcement plate and the at least a second reinforcement plate through the at least one support element. Preferably, the first end and the second end of the at least one support element comprise through-holes wherein the first joining means, being preferably bolts or screws, are disposed, in such a manner that the first joining means go through the at least one support element to connect the at least a first reinforcement plate and the at least a second reinforcement plate.

Optionally, the first end comprises at least first joining means configured to connect the at least a first reinforcement plate to the at least one support element and the second end comprises at least second joining means configured to connect the at least a second reinforcement plate to the at least one support element. Preferably, the first end and the second end of the at least one support element comprise blind holes wherein the first joining means and the second joining means, being preferably bolts or screw, are respectively disposed, in such a manner that the first joining means connects the at least a first reinforcement plate and the at least one support element and the second joining means connects the at least a second reinforcement plate and the at least one support element.

Optionally, the at least a first reinforcement plate comprises a first arc-shaped groove and a second groove, wherein the second groove is disposed diametrically opposite to the first arc-shaped groove

The shape and arrangement of the grooves of the at least a first reinforcement plate provide a weight reduction and a stress optimization in the pitch bearing without increasing the stiffness of the pitch bearing, also reducing the required forces of the pitch bearing actuator.

Preferably, the first arc-shaped groove is disposed in a first region of the at least a first reinforcement plate, the first region being the region of the at least a first reinforcement plate closest to the low speed shaft when the pitch bearing is mounted on the wind turbine, whereas the second groove is disposed in a second region of the at least a first reinforcement plate, the second region being the region of the at least a first reinforcement plate closest to the nose cone of the rotor hub when the pitch bearing is mounted on the wind turbine.

Also preferably, the first arc-shaped groove is a circumference arc-shaped groove. Advantageously, the angle covered by the circumference arc-shaped groove is in the interval (100°, 180°), more preferably in the interval (120°, 160°).

Preferably, the at least a first reinforcement plate is attached to the inner ring.

Optionally, the at least a second reinforcement plate comprises a first arc-shaped groove and a second groove, wherein the second groove is disposed diametrically opposite to the first arc-shaped groove

The combined shape and arrangement of the at least a first reinforcement plate and the at least a second reinforcement plate provide a weight reduction and a stress optimization in the pitch bearing, also reducing the required forces of the pitch bearing actuator.

Preferably, the first arc-shaped groove is disposed in a first region of the at least a second reinforcement plate, the first region being the region of the at least a second reinforcement plate closest to the low speed shaft when the pitch bearing is mounted on the wind turbine, whereas the second groove is disposed in a second region of the at least a second reinforcement plate, the second region being the region of the at least a second reinforcement plate closest to the nose cone of the rotor hub when the pitch bearing is mounted on the wind turbine.

Also preferably, the first arc-shaped groove is a circumference arc-shaped groove. Advantageously, the angle covered by the circumference arc-shaped groove is in the interval (100°, 180°), more preferably in the interval (120°, 160°).

Preferably, the at least a second reinforcement plate is attached to the inner ring.

Preferably, the at least one support element is configured to connect the at least a first reinforcement plate and the at least a second reinforcement plate between a third region of the at least a first reinforcement plate and a third region of the at least a second reinforcement plate, wherein preferably, the third region of the at least a first reinforcement plate and a third region of the at least a second reinforcement plate are substantially disposed at the same distance with regard to the central axis.

In this way, the stresses in the pitch bearing are locally limited to areas proximal to the at least one support element, being substantially the third region of the at least a first reinforcement plate and the third region of the at least a second reinforcement plate.

Optionally, the second axial end is closer to the blade than the first axial end, being the thickness of the at least a first reinforcement plate greater than the thickness of the at least a second reinforcement plate.

The invention also relates to a method of limiting the stresses in the reinforcement plates of a pitch bearing of a wind turbine, wherein the wind turbine comprises a low speed shaft that connects a rotor hub to a gearbox, wherein the rotor hub comprises a nose cone opposite to the low speed shaft, and wherein the pitch bearing comprises a pitch bearing actuator, at least a first reinforcement plate, at least a second reinforcement plate, at least one support element configured to connect the at least a first reinforcement plate and the at least a second reinforcement plate, an outer ring and an inner ring, wherein the outer ring and the inner ring are arranged coaxially to each other, thus comprising a central axis for both rings, wherein the method comprises the following steps:
- attaching the at least a first reinforcement plate to the inner ring at a first axial end of the pitch bearing defined with regard to the central axis,
- attaching the at least a second reinforcement plate to the inner ring at a second axial end of the pitch bearing defined with regard to the central axis,
- connecting a pitch bearing actuator shaft to a first connecting surface disposed on a hub side surface, and

- connecting the at least a first reinforcement plate and the at least a second reinforcement plate to the at least one support element,
- wherein the step of connecting the at least a first reinforcement plate and the at least a second reinforcement plate to the at least one support element is carried out connecting the at least one support element to the first reinforcement plate on a second connecting surface disposed in a region close to the first connecting surface.

Optionally, the step of connecting the at least a first reinforcement plate and the at least a second reinforcement plate to the at least one support element is carried out connecting the at least one support element to the first reinforcement plate on a second connecting surface disposed on a blade side surface, in a region close to the first connecting surface.

Optionally, the step of connecting the at least a first reinforcement plate and the at least a second reinforcement plate to the at least one support element is carried out connecting the at least one support element to the first reinforcement plate on a second connecting surface being opposite to the first connecting surface, in a region close to the first connecting surface.

Optionally, the step of connecting is carried out connecting the at least a first reinforcement plate and the at least a second reinforcement plate through the at least one support element by means of a first end and a second end of the at least one support element.

Optionally, the step of connecting is carried out connecting the at least a first reinforcement plate to the at least one support element by means of a first end of the at least one support element and connecting the at least a second reinforcement plate to the at least one support element by means of a second end of the at least one support element.

Preferably, the step of attaching the at least a first reinforcement plate to a first axial end of the pitch bearing defined with regard to the central axis is carried out attaching the at least a first reinforcement plate to the inner ring or to the outer ring, more preferably to the inner ring.

Preferably, the step of attaching the at least a second reinforcement plate to a second axial end of the pitch bearing defined with regard to the central axis is carried out attaching the at least a second reinforcement plate to the inner ring or to the outer ring, more preferably to the inner ring.

Optionally, the method further comprises the step of:
- manufacturing the at least a first reinforcement plate with a first arc-shaped groove and a second groove, wherein the second groove is disposed diametrically opposite to the first arc-shaped groove.

Optionally, the step of manufacturing the at least a first reinforcement plate with a first arc-shaped groove and a second groove is carried out manufacturing the first arc-shaped groove in a first region of the at least a first reinforcement plate, the first region being the region of the at least a first reinforcement plate closest to the low speed shaft when the pitch bearing is mounted on the wind turbine, and manufacturing the second groove in a second region of the at least a first reinforcement plate, the second region being the region of the at least a first reinforcement plate closest to the nose cone of the rotor hub when the pitch bearing is mounted on the wind turbine.

Optionally, the method
further comprises the step of:
- manufacturing the at least a second reinforcement plate with a first arc-shaped groove and a second groove, wherein the second groove is disposed diametrically opposite to the first arc-shaped groove, and Optionally, the step of :
- connecting the at least a first reinforcement plate and the at least a second reinforcement plate to the at least one support element, is carried out connecting the at least a first reinforcement plate and the at least a second reinforcement plate by means of the at least one support element between a third region of the at least a first reinforcement plate and a third region of the at least a second reinforcement plate, wherein preferably, the third region of the at least a first reinforcement plate and a third region of the at least a second reinforcement plate are substantially disposed at the same distance with regard to the central axis.

### BRIEF DESCRIPTION OF THE DRAWINGS

Figure 1 shows a frontal view of the at least a first reinforcement plate and the at least a second reinforcement plate of the pitch bearing coupled by means of the at least one support element of the pitch bearing of the present invention.
Figure 2 shows a perspective view of the at least a first reinforcement plate or the at least a second reinforcement plate of the pitch bearing of the present invention.
Figure 3 shows the arrangement of the at least one support element for each one of the at least a first reinforcement plate and the at least a second reinforcement plate of the pitch bearing of each blade of the wind turbine.
Figure 4 shows a preferred embodiment for the at least one support element of the pitch bearing of the present invention.

### PREFERRED EMBODIMENT OF THE INVENTION

In a first preferred embodiment of the invention, the pitch bearing of the wind turbine, wherein the wind turbine comprises a low speed shaft (not shown) that connects a rotor hub (1) to a gearbox (nor shown), wherein the rotor hub (1) comprises a nose cone (2) opposite to the low speed shaft, and wherein the pitch bearing comprises:
a pitch bearing actuator (3),
at least a first reinforcement plate (11),
at least a second reinforcement plate (12),
at least one support element (13) configured to connect the at least a first reinforcement plate (11) and the at least a second reinforcement plate (12),
an outer ring (4) and an inner ring (5), wherein the outer ring (4) and the inner ring (5) are arranged coaxially to each other, thus comprising a central axis (6) for both rings,
wherein the at least a first reinforcement plate (11) is arranged at a first axial end (21) of the pitch bearing defined with regard to the central axis (6),
wherein the at least a second reinforcement plate (12) is arranged at a second axial end (22) of the pitch bearing defined with regard to the central axis (6),
wherein the at least first reinforcement plate (11) and the at least a second reinforcement plate (12) are arranged substantially parallel to each other,
wherein the at least a first reinforcement plate (11) is attached to the inner ring (5),
wherein the at least a second reinforcement plate (12) is attached to the inner ring (5), and
wherein the at least a first reinforcement plate (11) comprises a first connecting surface (111) disposed on a hub side, wherein a pitch bearing actuator shaft (20) is configured to be connected to the first connecting surface (111),
wherein the at least one support element (13) configured to connect the at least a first reinforcement plate (11) and the at least a second reinforcement plate (12) is connected to the first reinforcement plate (11) on a second connecting surface (112) opposite to the first connecting surface disposed on a blade side surface, in a region close to the first connecting surface (111).

Preferably, the at least one support element (13) comprises a first cylindrical element (14), a first end (15) adjacent to the first cylindrical element (14) being a second cylindrical element and a second end (16) adjacent to the first cylindrical element (14) being a third cylindrical element.

Preferably, the first cylindrical element (14), the first end (15) and the second end (16) are hollow-shaped cylindrical elements.

Preferably, the second cylindrical element and the third cylindrical element have the same diameter.

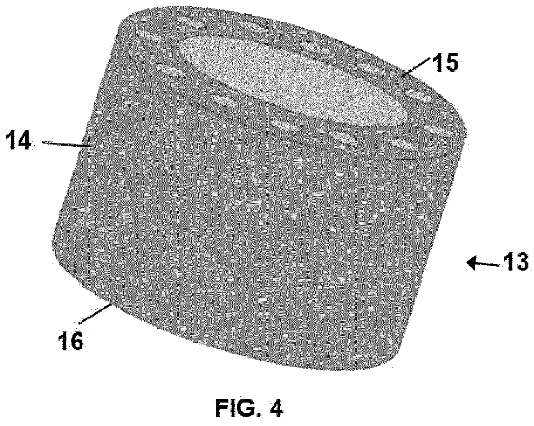

In a first preferred embodiment shown in Figure 4, the second cylindrical element and the third cylindrical element have the same diameter as the diameter of the first cylindrical element (14).

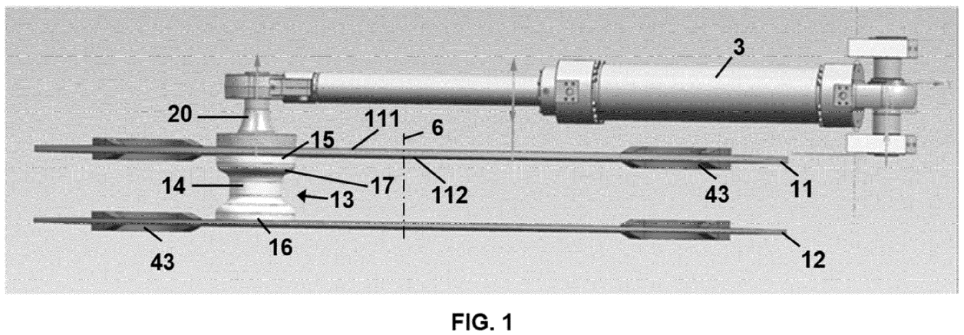

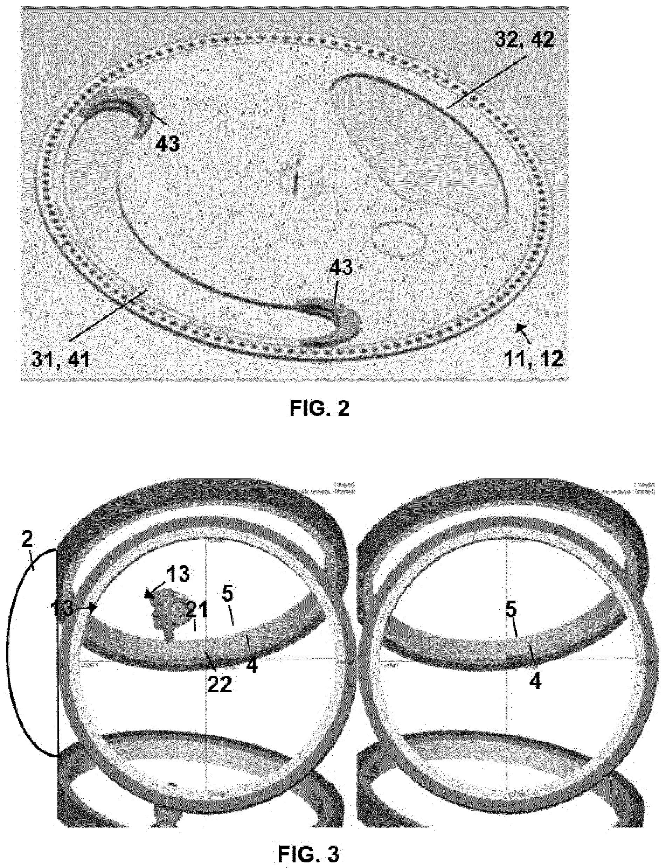

In a second preferred embodiment shown in Figures 1 and 3, the second cylindrical element and the third cylindrical element have a different diameter, preferably a bigger diameter, than the diameter of the first cylindrical element (14). In this embodiment, the at least one support element (13) further comprises transition zones (17) between the first end (15) and the first cylindrical element (14), and between the second end (16) and the first cylindrical element (14).

The first end (15) and the second end (16) comprise at least first joining means (not shown) configured to connect the at least a first reinforcement plate (11) and the at least a second reinforcement plate (12) through the at least one support element (13).

For any of the first or second preferred embodiments described above, the first end (15) and the second end (16) of the at least one support element (13) comprise through-holes (17) wherein the first joining means, being preferably bolts or screws, are disposed, in such a manner that the first joining means go through the at least one support element (13) to connect the at least a first reinforcement plate (11) and the at least a second reinforcement plate (12), or alternatively the first end (15) comprises at least first joining means configured to connect the at least a first reinforcement plate (11) to the at least one support element (13) and the second end (16) comprises at least second joining means configured to connect the at least a second reinforcement plate (12) to the at least one support element (13). Preferably, the first end and the second end of the at least one support element comprise blind holes (18) wherein the first joining means and the second joining means, being preferably bolts or screws, are respectively disposed, in such a manner that the first joining means connects the at least a first reinforcement plate (11) and the at least one support element (13) and the second joining means connects the at least a second reinforcement plate (12) and the at least one support element (13).

Preferably, the at least a first reinforcement plate (11) comprises a first arc-shaped groove (31) and a second groove (32), wherein the second groove (32) is disposed diametrically opposite to the first arc-shaped groove (31), and
wherein the first arc-shaped groove (31) is disposed in a first region of the at least a first reinforcement plate (11), the first region being the region of the at least a first reinforcement plate (11) closest to the low speed shaft when the pitch bearing is mounted on the wind turbine, whereas the second groove (32) is disposed in a second region of the at least a first reinforcement plate, the second region being the region of the at least a first reinforcement plate (11) closest to the nose cone (2) of the rotor hub (1) when the pitch bearing is mounted on the wind turbine.

Preferably, the first arc-shaped groove (31) is a circumference arc-shaped groove. Advantageously, the angle covered by the circumference arc-shaped groove is in the interval (100°, 180°), more preferably in the interval (120°, 160°) and more preferably being substantially 140°.

Preferably, the at least a second reinforcement plate (12) comprises a first arc-shaped groove (41) and a second groove (42), wherein the second groove (42) is disposed diametrically opposite to the first arc-shaped groove (41).

Preferably, the second axial end (22) is closer to the blade than the first axial end (21), being the thickness of the at least a first reinforcement plate (11) greater than the thickness of the at least a second reinforcement plate (12), wherein the thickness of the at least a first reinforcement plate (11) is in the interval (25mm, 35mm) and the thickness of the at least a second reinforcement plate (12) is in the interval (15mm, 25mm), more preferably being the thickness of the at least a first reinforcement plate (11) 30mm and the thickness of the at least a second reinforcement plate (12) 20 mm.

The disposal, forms and angle covered by the grooves of the at least a second reinforcement plate (12) can be the same than those of the at least first reinforcement plate (11).

Preferably, the first arc-shaped groove (31, 41) and/or the second groove (32, 42) further comprises at least a reinforcement element (43) located at their ends that provide an increased thickness of the reinforcement plates (11, 12).

Preferably, the at least one support element (13) is configured to connect the at least a first reinforcement plate (11) and the at least a second reinforcement plate (12) between a third region of the at least a first reinforcement plate (11) and a third region of the at least a second reinforcement plate (12) that are substantially disposed at the same distance with regard to the central axis (6), wherein the stiffness of the pitch bearing comprising the at least one support element (13) configured to connect the at least a first reinforcement plate (11) and the at least a second reinforcement plate (12) is not increased with regard to that wherein the pitch bearing comprises the at least a first reinforcement plate (11) and the at least a second reinforcement plate (12) not being connected by the at least one support element as the comparison shown in Figure 3.

Preferably the at least one support element (13) of the pitch bearing is aligned with of the pitch bearing actuator that is preferably of the ball joint type.

The at least one support element only helps to increase the stiffness of the at least a second reinforcement plate (12) for this embodiment, i.e. the reinforcement plate located closer to the hub with less material than just a local reinforcement of this reinforcement plate, which in turn helps reducing the required forces of the pitch bearing actuator.

## Claims

1. Pitch bearing of a wind turbine, wherein the wind turbine comprises a low speed shaft that connects a rotor hub (1) to a gearbox, wherein the rotor hub (1) comprises a nose cone (2) opposite to the low speed shaft, and wherein the pitch bearing comprises:
a pitch bearing actuator (3),
at least a first reinforcement plate (11),
at least a second reinforcement plate (12),
at least one support element (13) configured to connect the at least a first reinforcement plate (11) and the at least a second reinforcement plate (12),
an outer ring (4) and an inner ring (5), wherein the outer ring (4) and the inner ring (5) are arranged coaxially to each other, thus comprising a central axis (6) for both rings,
wherein the at least a first reinforcement plate (11) is attached to the inner ring (5) and is arranged at a first axial end (21) of the pitch bearing defined with regard to the central axis (6),
wherein the at least a second reinforcement plate (12) is attached to the inner ring (5) and is arranged at a second axial (22) end of the pitch bearing defined with regard to the central axis (6),
wherein the at least a first reinforcement plate (11) comprises a first connecting surface (111) disposed on a hub side surface, whereto a pitch bearing actuator shaft (20) is configured to be connected,
**characterized in that** the at least one support element (13) configured to connect the at least a first reinforcement plate (11) and the at least a second reinforcement plate (12) is connected to the at least a first reinforcement plate (11) on a second connecting surface (112) disposed in a region close to the first connecting surface (111).

2. Pitch bearing of a wind turbine according to claim 1 **characterized in that** the second connecting surface (112) of the at least a first reinforcement plate (11) is disposed on a blade side surface.

3. Pitch bearing of a wind turbine according to any one of the previous claims **characterized in that** the second connecting surface (112) is opposite to the first connecting surface (111).

4. Pitch bearing of a wind turbine according to any one of the previous claims **characterized in that** the at least one support element (13) comprises a first cylindrical element (14).

5. Pitch bearing of a wind turbine according to claim 4 **characterized in that** the first cylindrical element (14) is a hollow-shaped cylindrical element.

6. Pitch bearing of a wind turbine according to any one of claims 4 or 5 **characterized in that** the at least one support element (13) further comprises a first end (15) adjacent to the first cylindrical element (14) and a second end (16) adjacent to the first cylindrical element (14).

7. Pitch bearing of a wind turbine according to claim 6 **characterized in that** the first end (15) is a second cylindrical element and the second end (16) is a third cylindrical element.

8. Pitch bearing of a wind turbine according to claim 7 **characterized in that** the second cylindrical element and the third cylindrical element have the same diameter.

9. Pitch bearing of a wind turbine according to claim 8 **characterized in that** the second cylindrical element and the third cylindrical element have the same diameter.

10. Pitch bearing of a wind turbine according to claim 8 **characterized in that** the second cylindrical element and the third cylindrical element have a different diameter, preferably a bigger diameter, than the diameter of the first cylindrical element.

11. Pitch bearing of a wind turbine according to claim 10 **characterized in that** the at least one support element (13) further comprises transition zones (17) between the first end (15) and the first cylindrical element (14) and between the second end (16) and the first cylindrical element (14).

12. Pitch bearing of a wind turbine according to any one of the claims 6 to 11 **characterized in that** the first end (15) and the second end (16) comprise at least first joining means configured to connect the at least a first reinforcement plate (11) and the at least a second reinforcement plate (12) through the at least one support element.

13. Pitch bearing of a wind turbine according to claim 12 **characterized in that** the first end (15) and the second end (16) of the at least one support element (13) comprise through-holes (17) wherein the first joining means, being preferably bolts or screws, are disposed, in such a manner that the first joining means go through the at least one support element (13) to connect the at least a first reinforcement plate (11) and the at least a second reinforcement plate (12).

14. Pitch bearing of a wind turbine according to any one of the claims 6 to 11 **characterized in that** the first end (15) comprises at least first joining means configured to connect the at least a first reinforcement plate (11) to the at least one support element (13) and the second end (16) comprises at least second joining means configured to connect the at least a second reinforcement plate (12) to the at least one support element (13).

15. Pitch bearing of a wind turbine according to claim 14 **characterized in that** the first end (15) and the second end (16) of the at least one support element (13) comprise blind holes (18) wherein the first joining means and the second joining means, being preferably bolts or screw, are respectively disposed, in such a manner that the first joining means connects the at least a first reinforcement plate (11) and the at least one support element (13) and the second joining means connects the at least a second reinforcement plate (12) and the at least one support element (13).

16. Pitch bearing of a wind turbine according to any one of the previous claims **characterized in that** the at least a first reinforcement plate (11) comprises a first arc-shaped groove (31) and a second groove (32), wherein the second groove (32) is disposed diametrically opposite to the first arc-shaped groove (31) and/or the at least a second reinforcement plate (12) comprises a first arc-shaped groove (41) and a second groove (42), wherein the second groove (42) is disposed diametrically opposite to the first arc-shaped groove (41).

17. Pitch bearing of a wind turbine according to claim 16 **characterized in that** the first arc-shaped groove (31, 41) is disposed in a first region of the at least a first reinforcement plate (11) or the at least a second reinforcement plate (12), the first region being the region of the at least a first reinforcement plate (11) or the region of the at least a second reinforcement plate (12) closest to the low speed shaft when the pitch bearing is mounted on the wind turbine, whereas the second groove (32) is disposed in a second region of the at least a first reinforcement plate (11) or the at least a second reinforcement plate (12), the second region being the region of the at least a first reinforcement plate (11) or the at least a second reinforcement plate (12) closest to the nose cone (2) of the rotor hub (1) when the pitch bearing is mounted on the wind turbine.

18. Pitch bearing of a wind turbine according to any one of the claims 16 or 17 **characterized in that** the first arc-shaped groove (31) is a circumference arc-shaped groove, wherein preferably, the angle covered by the circumference arc-shaped groove is in the interval (100°, 180°), more preferably in the interval (120°, 160°) and more preferably being substantially 140°.

19. Pitch bearing of a wind turbine according to any one of the claims 16 to 18 **characterized in that** the first arc-shaped groove (31, 41) and/or the second groove (32, 42) further comprises at least a reinforcement element (43) located at their ends.

20. Pitch bearing of a wind turbine according to any one of the previous claims **characterized in that** the second axial end (22) is closer to the blade than the first axial end (21), being the thickness of the at least a first reinforcement plate (11) greater than the thickness of the at least a second reinforcement plate (12).

21. Pitch bearing of a wind turbine according to claim 20 **characterized in that** the thickness of the at least a first reinforcement plate (11) is in the interval (25mm, 35mm) and the thickness of the at least a second reinforcement plate (12) is in the interval (15mm, 25mm), more preferably being the thickness of the at least a first reinforcement plate (11) 30mm and the thickness of the at least a second reinforcement plate (12) 20 mm.

22. Method of limiting the stresses in the reinforcement plates of a pitch bearing of a wind turbine, wherein the wind turbine comprises a low speed shaft that connects a rotor hub (1) to a gearbox, wherein the rotor hub (1) comprises a nose cone (2) opposite to the low speed shaft, and wherein the pitch bearing comprises:
a pitch bearing actuator (3),
at least a first reinforcement plate (11),
at least a second reinforcement plate (12),
at least one support element (13) configured to connect the at least a first reinforcement plate (12) and the at least a second reinforcement plate (13),
an outer ring (4) and an inner ring (5), wherein the outer ring (4) and the inner ring (5) are arranged coaxially to each other, thus comprising a central axis (6) for both rings, wherein the method comprises the following steps:
- attaching the at least a first reinforcement plate (11) to the inner ring (5) at a first axial end (21) of the pitch bearing defined with regard to the central axis (6),
- attaching the at least a second reinforcement plate (12) to the inner ring (5) at a second axial end (22) of the pitch bearing defined with regard to the central axis (6),
- connecting a pitch bearing actuator shaft (20) to a first connecting surface (111) disposed on a hub side surface, and
- connecting the at least a first reinforcement plate (11) and the at least a second reinforcement plate (12) to the at least one support element (13),
**characterized in that** the step of connecting the at least a first reinforcement plate (11) and the at least a second reinforcement plate (12) to the at least one support element (13) is carried out connecting the at least one support element (13) to the at least a first reinforcement plate (11) on a second connecting surface (112) disposed in a region close to the first connecting surface (111).

23. Method of limiting the stresses in the reinforcement plates of a pitch bearing of a wind turbine according to claim 22 **characterized in that** the step of connecting the at least a first reinforcement plate (11) and the at least a second reinforcement plate (12) to the at least one support element (13) is carried out connecting the at least one support element (13) to the at least a first reinforcement plate (11) on a second connecting surface (112) disposed on a blade side surface, in a region close to the first connecting surface (111).

24. Method of limiting the stresses in the reinforcement plates of a pitch bearing of a wind turbine according to any one of the claims 22 or 23 **characterized in that** the step of connecting the at least a first reinforcement plate (11) and the at least a second reinforcement plate (12) to the at least one support element (13) is carried out connecting the at least one support element (13) to the at least a first reinforcement plate (11) on a second connecting surface (112) disposed on a blade side surface and being opposite to the first connecting surface (111), in a region close to the first connecting surface (111).

25. Method of limiting the stresses in the reinforcement plates of a pitch bearing of a wind turbine according to any of the claims 22 to 24 **characterized in that** the step of connecting the at least a first reinforcement plate (11) and the at least a second reinforcement plate (12) to the at least one support element (13) is carried out by means of a first cylindrical element (14) of the at least one support element (13).

26. Method of limiting the stresses in the reinforcement plates of a pitch bearing of a wind turbine according to claim 25, **characterized in that** the step of connecting is carried out connecting the at least a first reinforcement plate (11) and the at least a second reinforcement plate (12) through the at least one support element (13) by means of a first end (15) and a second end (16) of the at least one support element (13).

27. Method of limiting the stresses in the reinforcement plates of a pitch bearing of a wind turbine according to claim 25, **characterized in that** the step of connecting is carried out connecting the at least a first reinforcement plate (11) to the at least one support element (13) by means of a first end (15) of the at least one support element (13) and connecting the at least a second reinforcement plate (12) to the at least one support element (13) by means of a second end (16) of the at least one support element (13).

28. Method of limiting the stresses in the reinforcement plates of a pitch bearing of a wind turbine according to any one of the claims 22 to 27, **characterized in that** further comprises the step of:
- manufacturing the at least a first reinforcement plate (11) and/or the at least a second reinforcement plate (12) with a first arc-shaped groove (31, 41) and a second groove (32, 42), wherein the second groove (32, 42) is disposed diametrically opposite to the first arc-shaped groove (31, 41).
